Europäisches Patentamt

European Patent Office

Office européen des brevets

(11) Veröffentlichungsnummer: **0 305 640**

**A2**

⑫ — **EUROPÄISCHE PATENTANMELDUNG**

(21) Anmeldenummer: **88106352.3**

(22) Anmeldetag: **21.04.88**

(51) Int. Cl.⁴: **H04N 7/00 , H04N 5/93**

(30) Priorität: **02.09.87 DE 8711866 U**

(43) Veröffentlichungstag der Anmeldung:
**08.03.89 Patentblatt 89/10**

(84) Benannte Vertragsstaaten:
**AT BE CH DE FR GB IT LI NL SE**

(71) Anmelder: **ANT Nachrichtentechnik GmbH**
**Gerberstrasse 33**
**D-7150 Backnang(DE)**

(72) Erfinder: **Borsum, Eckard, Dipl.-Ing.**
**Lichtensteinstrasse 48**
**D-7150 Backnang(DE)**
Erfinder: **Drinda, Klaus, Dipl.-Ing.**
**Tannenweg 12**
**D-7150 Backnang(DE)**

(54) **Verfahren zum Decodieren der Steuerinformation aus einem Multiplex-Komponenten-Videosignal sowie Anordnung.**

㊗

1. Verfahren zum Gewinnen der Steuerinformation aus einem Multiplex-Komponenten-Videosignal sowie Anordnung.

2.1. Bei der Taktrückgewinnung und Aufbereitung von Steuerinformation aus einem Multiplex-Komponenten-Videosignal ist eine Signalverfälschung, insbesondere durch nicht mittelwertfreie Signalkomponenten unerwünscht.

2.2. Deshalb wird vorgeschlagen, für die Zeit der nicht mittelwertfreien Signal-Komponenten eine Phasenregelschleife (PLL) zur Taktrückgewinnung in Abhängigkeit eines Decodersignals (DB) zu unterbrechen (S1).

2.3. Das Verfahren eignet sich insbesondere zur Ableitung von Steuerinformationen, wie Synchron- bzw. Rahmeninformation, aus einem D2-MAC Signal.

Fig. 2

# Verfahren zum Decodieren der Steuerinformation aus einem Multiplex-Komponenten-Videosignal sowie Anordnung

Die Erfindung geht aus von einem Verfahren gemäß dem Oberbegriff des Patentanspruchs 1. Ein solches Verfahren bzw. eine auf einem solchen Verfahren basierende Anordnung, ist bekannt aus Rundfunktechnische Mitteilungen, Jahrgang 29 (1985), Heft 5, Seiten 229-246, insbesondere Bild 24.

Bei der Anordnung gemäß Rundfunktechnische Mitteilungen, Jahrgang 29 (1985), Heft 5, Seiten 229-246, insbesondere Bild 24, wird der D2-Anteil in einem D2-MAC Signal mittels eines Duobinärdecoders wiedergewonnen. Aus dem decodierten Duobinärsignal wird der Takt abgeleitet und Steuerinformationen, wie z.B. Zeilen- und Bildsynchronimpulse, gewonnen.

Aufgabe der Erfindung ist es, ausgehend vom Oberbegriff des Patentanspruchs 1, ein Verfahren anzugeben, welches eine möglichst fehlerfreie Rückgewinnung von Takt- und Steuerinformation gestattet. Außerdem soll eine Anordnung zum Durchführen dieses Verfahrens aufgezeigt werden. Diese Aufgabe wird bezüglich des Verfahrens durch die Merkmale des Patentanspruchs 1 und bezüglich der Anordnung durch die Merkmale des Patentanspruchs 5 gelöst. Die Patentansprüche 2 bis 4 betreffen Weiterbildungen des Verfahrens und der Patentanspruch 6 eine Weiterbildung der Anordnung.

Der Vorteil der Erfindung ist dadurch gegeben, daß die Phasenregelschleife nur während der Zeit nachsynchronisiert, wenn im Multiplex-Komponenten-Videosignal der Datenburst auftritt. Eine fehlerhafte Regelung und damit fehlerbehaftete Takt- und Steuerinformation, etwa beeinflußt durch einen MAC (multiplexed analogue components) -Anteil, tritt nicht auf.
Das Verfahren nach der Erfindung läßt sich insbesondere für D2-MAC Signale aber auch für D-MAC Signale einsetzen.

Anhand der Zeichnungen wird ein Ausführungsbeispiel der Erfindung nun näher erläutert.

Es zeigen

Fig. 1 eine schematische Darstellung eines D2-MAC-Signals während einer Zeilenperiode und

Fig. 2 ein Prinzipschaltbild einer Anordnung zum Durchführen des Verfahrens.

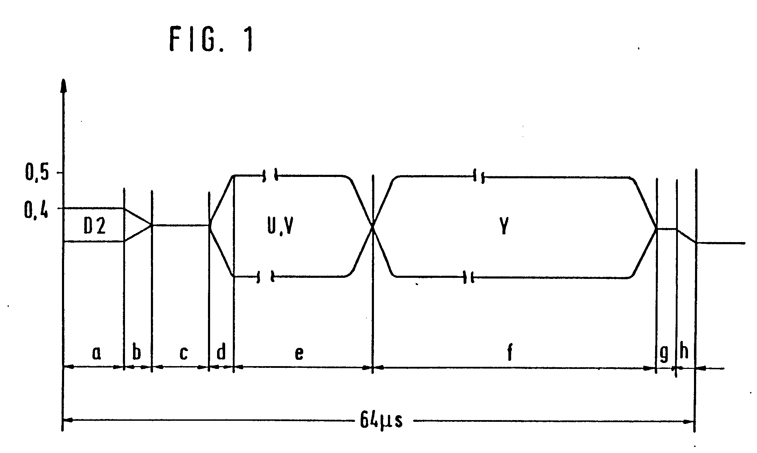

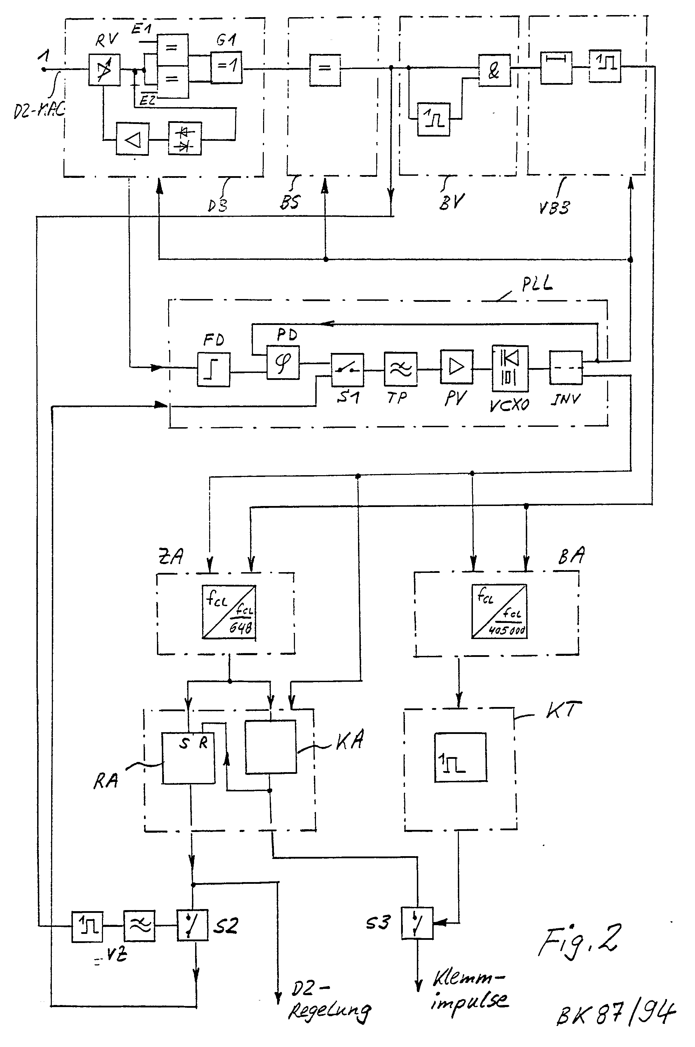

Das zusammengesetzte Basisbandsignal, aus dem die Binärinformation wiedergewonnen werden soll, sei beispielsweise ein D2-MAC/Paket-Signal, welches als Übertragungssignal für Fernsehsatelliten vorgesehen ist. Den Aufbau dieses D2-MAC/Paket-Signals für eine Zeilenperiode zeigt Fig. 1. Während des Zeitabschnitts a werden duobinär codierte digitale Signale übertragen, welche die Zeilensynchronisierung, Tonkanäle und weitere Daten beinhalten. Der Zeitabschnitt b ist ein Übergangszeitabschnitt zum Ausschwingen des Datenbursts, an den sich der Zeitabschnitt c anschließt. Dieser Zeitabschnitt c wird als Klemmperiode bezeichnet. Die Klemmperiode enthält einen analogen Nullreferenzwert der Farbdifferenzsignale. Auf diesen Bezugswert erfolgt die Regelung des Datenbursts - D2-Anteil im Duobinärdecoder.

Der Zeitabschnitt d stellt wieder einen Übergangszeitabschnitt dar, an den sich der Zeitabschnitt e anschließt. Während des Zeitabschnitts e werden zeilenweise abwechselnd die komprimierten Farbdifferenzsignale U und V übertragen. Die Leuchtdichteinformation Y wird im Zeitabschnitt f übertragen mit Übergang zum Klemmpegel - Zeitabschnitt g - am Ende der Leuchtdichteinformation. Vom Klemmpegel erfolgt während des Zeitabschnitts h der Übergang zum Datenburst.

Wie die Fig. 2 zeigt, wird dem Eingang 1 ein D2-MAC Signal zugeführt. Es durchläuft über einen Regelverstärker RV zuerst einen Duobinär-Binärwandler DB als Decoder, der wie aus Rundfunktechnische Mitteilungen, Jahrgang 29 (1985), Heft 5, Seite 232, bekannt, aus zwei Schwellwertentscheidern mit den Entscheiderschwellen E1 und E2 und einem Exclusiv-ODER Gatter G1 aufgebaut sein kann. Im Duobinär-Binärwandler wird das duobinärcodierte D2 Datensignal in ein Binärsignal umgewandelt. Die Binärfolge am Ausgang des Duobinär-Binärwandlers DB wird einem Bildsynchronwortdetektor BS zugeführt. Dort wird das Bildsynchronwort der Länge 64 Bit, das in der 625. Zeile untergebracht ist, mittels eines Schwellwertentscheiders detektiert. In einer nachgeschalteten Bildsynchronwort-Verifikation BV wird festgestellt, ob zwei aufeinanderfolgende Bildsynchronwörter den zeitlichen Abstand eines Vollbildes aufweisen. Ist dies der Fall, wird angenommen, daß es sich um das richtige Bildsynchronwort der Zeile 625 handelt. Für die Bildsynchronwort-Verifikation BV kann eine UND-Schaltung eingesetzt werden, die das unverzögerte Bildsynchronwort mit dem um ein Vollbild verzögerte Bildsynchronwort verknüpft.

Das verifizierte Bildsynchronwort gelangt nun zu einer Stufe "Verzögerung Bildsynchronwort-Bildfang" VBB. In einer Verzögerungsschaltung wird dort die Verzögerungszeit zwischen detektiertem Bildsynchronwort und dem Bildanfang des D2-MAC Signals eingestellt.

Zur Taktrückgewinnung ist eine Phasenregelschleife PLL vorgesehen. Ein vom Duobinär-Binärwandler DB abgegebenes Ausgangssignal wird über einen Flankendetektor FD einem ersten Eingang einer Phasenvergleichsstufe PD zugeführt. Am Ausgang dieser Phasenvergleichsstufe PD ist ein erster Schalter S1 vorgesehen, der - wie noch erläutert wird -durch eine Rahmeninformation nichtleitend gesteuert werden kann. Dem Schalter ist in Serie ein Tiefpaß TP, ein Schleifenverstärker PV, ein spannungsgesteuerter Quarzoszillator VCXO und ein Inverter INV nachgeschaltet. Das Ausgangssignal des Inverters stellt das rückgewonnene Taktsignal dar. Es wird zur Vervollständigung der Phasenregelschleife PLL auf einen zweiten Eingang der Phasenvergleichsstufe PD geführt. Das rückgewonnene Taktsignal wird folgenden Baugruppen zur Synchronisierung bzw. zur Gewinnung von Steuerinformation zugeführt:

dem Duobinär-Binärwandler DB,
dem Bildsynchronwortdetektor BS,
der Stufe VBB,
einer Einrichtung zur Zeilenfrequenzableitung ZA,
einer Einrichtung zur Bildfrequenzableitung BA und
einer Einrichtung zur Klemmimpulsableitung KA.

Die Einrichtung ZA teilt das Taktsignal mit der Frequenz $f_{ce}$ = 10,125 MHz mittels eines Frequenzzählers durch 648 und erzeugt die Zeilenfrequenz $f_z$ = 15,625 kHz, wobei der Frequenzzähler vom verzögerten Bildsynchronwort - Stufe VBB - getriggert wird. Die Einrichtung BA teilt das Taktsignal mittels eines Frequenzzählers durch 405 000 und erzeugt die Bildfrequenz $f_B$ = 25 Hz. Auch dieser Frequenzzähler wird vom verzögerten Bildsynchronwort getriggert. In der Einrichtung zur Klemmimpulsableitung KA ist ein Frequenzzähler vorgesehen, wobei der Beginn des Klemmimpulses durch die Dekodierung eines bestimmten Zählerstandes festgelegt wird und das Ende des Klemmimpulses durch den Zählerendwert. Eine Einrichtung zur Generierung der Rahmeninformation RA des D2-Signals - also des Duobinärrahmens - besteht aus einem Flip-Flop, dem über den SET-Eingang die Zeilenfrequenz $f_z$ und über den RESET-Eingang das Ausgangssignal der Einrichtung zur Klemmimpulsableitung KA zugeführt wird. Der Duobinärrahmen beginnt somit mit dem Zeilenfrequenzimpuls und endet mit dem Beginn des Klemmimpulses. In der Stufe zur Klemmimpulsaustastung KT wird ein Austastimpuls für einen Schalter S3 gewonnen, der ungefähr die Dauer der Zeilen 624 und 625 hat. Mit diesem Austastimpuls werden die Klemmimpulse der Zeilen 624 und 625 ausgetastet.

Zur Unterbrechung der Phasenregelschleife durch den Schalter S1 wird die Rahmeninformation am Ausgang der Einrichtung herangezogen und dem Schalter S1 als Schaltsteuersignal zugeführt. Die Zeit zwischen Rahmenende und Beginn des nächsten Duobinärrahmens entspricht genau der Dauer der nicht mittelwertfreien Signalkomponenten - hier dem MAC-Anteil im D2-MAC Signal.

Damit die Phasenregelschleife PLL erst nach Erkennen eines Bildsynchronwortes zugeschaltet wird, befindet sich ein weiterer Schalter S2 in der Verbindungsleitung zwischen dem Ausgang der Einrichtung RA und dem Steuereingang des Schalters S1. Zum Ansteuern des weiteren Schalters S2 wird das Bildsynchronwort am Ausgang des Bildsynchronwortdetektors BS über eine Verzögerungsstufe VZ geführt.

Das Ausgangssignal der Einrichtung RA kann zur Optimierung des D2-Signals bezüglich der Entscheiderschwellen E1 und E2 bei der Duobinär-Binärwandlung herangezogen werden. Diese Maßnahme ist in der DE Patentanmeldung 37 29 235.8 ausführlich beschrieben.

## Ansprüche

1. Verfahren zum Gewinnen der Steuerinformation aus einem Multiplex-Komponenten-Videosignal unter Verwendung einer Phasenregelschleife zur Taktrückgewinnung in Abhängigkeit eines Decodersignals für die Binärinformation im Multiplex-Komponenten-Videosignal,
dadurch gekennzeichnet,
daß für die Zeit der nicht mittelwertfreien Signalkomponenten im Multiplex-Komponenten-Videosignal die Phasenregelschleife unterbrochen wird.

2. Verfahren nach Anspruch 1,
dadurch gekennzeichnet,
daß zur Unterbrechung der Phasenregelschleife eine Rahmeninformation herangezogen wird, die aufgrund der decodierten Steuerinformationen generiert wird.

3. Verfahren nach Anspruch 1 oder 2,
dadurch gekennzeichnet,
daß die Phasenregelschleife erst dann zugeschaltet wird, wenn zuvor ein Bildsynchronwort aus der decodierten Steuerinformation erkannt wurde.

4. Verfahren nach einem der Ansprüche 1 bis 3,
dadurch gekennzeichnet,
daß die Rahmeninformation aus Zeilenfrequenz- und Klemmimpulsen gewonnen wird.

5. Anordnung zum Durchführen des Verfahrens nach einem der Ansprüche 1 bis 4,
gekennzeichnet durch
- einen Decoder (DB) für die Binärinformation im Multiplex-Komponenten-Videosignal,
- einer Phasenregelschleife (PLL) zur Taktrückgewinnung in einem Nebenweg des Decoders (DB),
- einem Schalter (S1) in der Phasenregelschleife (PLL), - einem Bildsynchronwortdetektor (BS) am Ausgang des Decoders (DB),
- Einrichtungen zur Zeilenfrequenzableitung und Klemmimpulsableitung (ZA, KA) aus dem rückgewonnenen Taktsignal,

- einer Einrichtung zur Generierung einer Rahmeninformation (RA) aus der abgeleiteten Zeilenfrequenz und den Klemmimpulsen,
- einer Verbindungsleitung zwischen der Einrichtung zum Generieren der Rahmeninformation (RA) und dem Steuereingang des Schalters (S1).

6. Anordnung nach Anspruch 5,
gekennzeichnet durch
- einen weiteren Schalter (S2) in der Verbindungsleitung zwischen der Einrichtung zum Generieren der Rahmeninformation (RA) und dem Steuereingang des Schalters (S1),
- einer Verzögerungsstufe (VZ) zum Verzögern des detektierten Bildsynchronwortes und Ansteuern des weiteren Schalters (S2).

FIG. 1

EP 0 305 640 A2

Fig. 2

BK 87/94